**Europäisches Patentamt**

**European Patent Office**

**Office européen des brevets**

(19)

(11) Publication number : **0 353 781 B1**

(12) # EUROPEAN PATENT SPECIFICATION

(45) Date of publication of patent specification :
25.11.92 Bulletin 92/48

(51) Int. Cl.⁵ : **B60B 3/04**, B21D 53/26

(21) Application number : **89115656.4**

(22) Date of filing : **16.10.85**

(54) **Styled wheel.**

(30) Priority : **01.11.84 US 667338**

(43) Date of publication of application :
**07.02.90 Bulletin 90/06**

(45) Publication of the grant of the patent :
**25.11.92 Bulletin 92/48**

(84) Designated Contracting States :
**DE FR GB**

(56) References cited :
DE-A- 2 813 952
US-A- 1 709 163
US-A- 3 808 660
US-A- 3 874 054

(60) Publication number of the earlier application in accordance with Art. 76 EPC : **0 180 507**

(73) Proprietor : **MOTOR WHEEL CORPORATION**
**4000 Collins Road**
**Lansing Michigan 48910 (US)**

(72) Inventor : **Daudi, Anwar R.**
**1150 Chartwell Carriage Way S.**
**E. Lansing Michigan 48 823 (US)**

(74) Representative : **Lemoine, Michel et al**
**CABINET LEMOINE ET BERNASCONI 13,**
**Boulevard des Batignolles**
**F-75008 Paris (FR)**

EP 0 353 781 B1

Jouve, 18, rue Saint-Denis, 75001 PARIS

## Description

This application is a division of European patent application EP-A-0180507 filed October 6, 1985.

The present invention relates to the art of vehicle wheels A wheel of the type according to the pre-characterising part of claim is known from US-A- 3874054.

Background of the Invention

A problem long-standing in the art lies in the production of pneumatic tires and wheels which, when assembled and operated on a vehicle, run true about their axis of rotation. Forces generated by any circumferential variations in the tire carcass and/or out-of-round condition in the tire or wheel cause vibrations, which in turn lead to dissatisfied customers and significant warranty claims against automobile manufacturers. The present trend among manufacturers toward higher tire inflation pressures and smaller vehicles to improve fuel economy accentuates this problem, so that uniformity of radial runout and force vibrations of the tire and wheel assembly has become more critical than in the past.

Vehicle wheels conventionally include a circular array of disc bolt openings adapted to receive mounting studs for mounting the wheel to a vehicle, and a centre pilot opening adapted to be received over the wheel hub. It has been and remains conventional practice in the industry to attempt to form the bolt mounting circle and centre-pilot openings co-axially with each other and with the tire rim bead seat, with the goal thus being a perfect true-running wheel. A number of techniques have been proposed for accomplishing this result, including formation of the bolt and centre openings with a single tool while locating off of the bead seat, machining the centre opening while locating off of the pre-formed bolt-mounting openings, and/or circumferentially permanently deforming the rim bead seats while locating off of the bolt-mounting and/or centre-pilot openings.

A particular problem is encountered in connection with so-called styled wheels which possess a deep-drawn neck or cone integrally projecting from the disc surrounding the centre-pilot opening to simulate a styled hub cap. It is conventional practice in manufacture of such wheels to machine the inside surface or ID at the base of the styled neck or cone while locating off of the bead seats to obtain concentricity between the centre opening and bead seats. Such a separate machining operation is expensive to implement and tends to weaken the disc structure at the base of the styled centre cone.

Patents US-A-4,279,287 and US-A-4,354,407 depart from the conventional practice of attempting to form a true-running wheel, and address the problem of radial runout and/or radial force variations in a pneumatic tire and wheel assembly by intentionally forming the bolt-mounting and/or centre-pilot openings in the wheel disc at the time of wheel manufacture on an axis which is eccentrically offset from the average axis of the bead seats on the wheel rim. This offset is in a direction and amount which is predetermined to locate the low point or high point of the first harmonic of beat seat radial runout circumferentially adjacent to a selected location on the wheel rim. In the preferred embodiments, the low point of the first harmonic of bead seat radial runout lies substantially within a quadrant centred about the valve hole in the rim. A pretested tire having the location of the high point of the first harmonic of radial force variation marked thereon may then be assembled onto the wheel such that the respective tire and wheel harmonics are complementary and thereby tend to cancel each other.

In the preferred wheel forming apparatus disclosed in the noted U.S. patents, the bolt and centre-pilot openings are formed by separate punches fixedly mounted on a single punch assembly which simultaneously punch-forms all of the openings in a wheel disc while the wheel is located by fixturing the same about the rim bead seats. Although the method and apparatus disclosed in the reference patents, as well as the wheels formed thereby, have enjoyed substantial success and acceptance in the art, a problem lies in the fact that the relationship of the bolt hole circle and centre-pilot opening with respect to each other is fixed at the time of die manufacture and cannot be readily adjusted thereafter. Another problem is encountered in connection with application of this technology to manufacture of styled wheels wherein the centre-pilot surface at the base of the styled disc cone cannot be readily formed while the bolt hole openings are formed.

Objects and Summary of the Invention

It is therefore an object of the present invention to provide a vehicle wheel of the described type wherein the centre-pilot and bolt-mounting openings are accurately and adjustably positioned with respect to each other and with respect to the average axis of the rim bead seats.

A further object of the invention is to provide a wheel which is economical to implement in mass production.

In summary, the foregoing and other objects are accomplished by forming the bolt and centre-pilot openings at separate stages of a continuous machine motion against the disc of a preassembled rim and disc while the rim is clamped and located around the bead seats. The preferred wheel forming apparatus includes a planar circumferential array of jaws mounted for radial reciprocation into engagement with the rim bead seats to fixture and hold a preassembled rim and disc and thereby define an average bead seat axis. An upper die assembly is mounted above the planar jaw array and includes punches for piercing and coining the bolt-mounting openings in a wheel fixtured by the jaws. A lower die assembly is mounted beneath the jaw array to engage and hold the wheel disc as the bolt openings are pierced. The lower die assembly and the circumferential jaw array are carried for conjoint downward motion about a fixed centre column under pressure from continued downward motion of the upper die assembly against the wheel disc. A swage punch is mounted on the upper end of the fixed centre column to engage and form the centre-pilot opening as the disc is carried downwardly thereagainst by the die assemblies.

The axis of the centre column and the conjoint axis of reciprocation of the upper and lower die assemblies (nominally) define the axis of the bolt-hole circle formed in the wheel disc. The jaws which locate the average bead seat axis are individually adjustable with respect to the die axis, so that the average bead seat axis and bolt hole axis may be aligned, or may be laterally offset as taught by the above-referenced patents. Likewise, the axis of the punch on the centre column is laterally selectable with respect to the column/die axis to accommodate coaxial positioning of the centre-pilot opening with the average bead seat axis, and/or alignment with the bolt-opening axis, and/or eccentric offsetting from both.

Operation of the apparatus thus in general contemplates fixturing of a preformed disc and rim so as to locate the average bead seat axis. A first or upper die assembly having bolt-opening punches mounted thereon is brought into engagement with the disc while a second or lower die assembly engages the opposing disc face to support the same as the bolt openings are formed. Continued downward motion of the upper die assembly after forming the bolt openings pushes the lower die, bead seat locators and wheel downwardly against a fixed punch which engages the wheel disc and forms the centre-pilot opening.

## Brief Description of the Drawings

The invention, together with additional objects, features and advantages thereof, will be best understood from the following detailed description, and the accompanying drawings in which:

FIG. 1 is a fragmentary outboard elevational view of a vehicle tire and wheel assembly which includes a styled vehicle wheel;

FIG. 2 is a fragmentary inboard elevational view on an enlarged scale of the bolt and centre-pilot opening region in the wheel of FIG. 1;

FIG. 3 is a sectional view of the wheel of FIG. 1 taken substantially along the line 3-3 of FIG. 1;

FIGS. 4-7 are fragmentary sectioned elevational views of apparatus for forming the bolt and centre-pilot openings in the wheel of FIGS. 1-3 at respective successive states of operation;

FIG. 8 is a fragmentary sectioned elevational view of a modified apparatus for forming bolt and centre-pilot openings in an alternative wheel configuration;

FIG. 9 is a fragmentary sectional view taken substantially along the line 9-9 in FIG. 8; and

FIG. 10 is a fragmentary sectional view taken substantially along the line 10-10 in FIG. 2.

## Detailed Description of the Preferred Embodiments

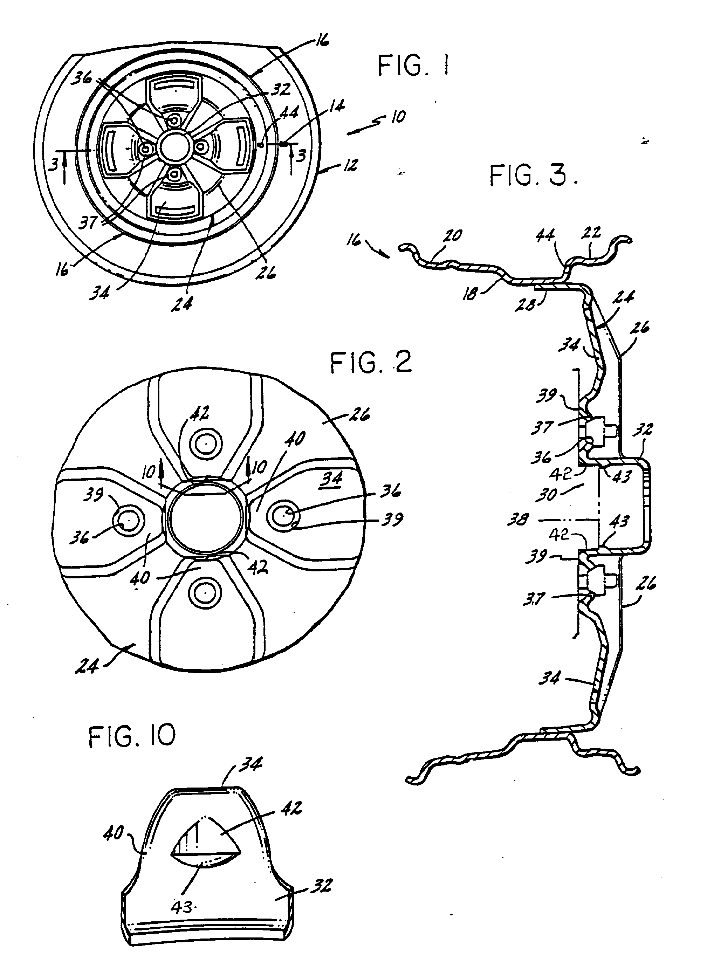

FIG. 1 illustrates a pneumatic tire and wheel assembly 10 as comprising a pneumatic tire 12 pretested for variations in radial force under dynamic operating conditions and having the circumferential location of a peak of the first harmonic of radial force variation marked at 14 on the tire sidewall. Tire 12 is mounted on a wheel 16. Referring collectively to FIG. 1-3 and 9, wheel 16 includes a wheel rim 18 having inboard and outboard bead seat regions 20, 22 for receiving respective inboard and outboard bead toes of tire 12 in the usual manner. Bead seat regions 20, 22 define an average bead seat axis which may be located using conventional test techniques.

A wheel mounting disc 24 is affixed to and internally spans rim 18 for mounting wheel 16 and assembly 10 on a vehicle. In the ornamental vehicle wheel illustrated in the drawings, disc 24 includes a circumferential series of radially directed axially raised spoke-simulating portions 26 which extend from the disc peripheral flange 28 radially inwardly to a hubcap-simulating cone 32 which surrounds the disc centre opening 30. Raised spoke-simulating disc portions 26 are circumferentially separated from each other by the radially directed axially inwardly depressed disc portions 34, which likewise extend from flange 28 to cone 32. Bolt openings 36 are formed in a circular array, one within each of the depressed disc portions 34 adjacent to cone 32 in a corresponding, slightly raised, bolt hole island 37. Bolt openings 36 are circularly arrayed on a bolt-circle axis. Each of the depressed disc portions 34 terminates in a radially inwardly directed shoulder 40 (FIGS. 2 and 10) which collectively define the centre-pilot opening which is received over and pilots wheel 16 on a spindle hub 38, as illustrated in phantom in FIG. 3. Hubcap-simulating cone 32 projects integrally axially outboard from shoulders 40 surrounding centre opening 30.

In accordance with the present invention, an arcuate radially inwardly directed land 42 is formed on each shoulder 40, with the several lands 42 being on a common imaginary cylinder of revolution which defines the effective axis of centre opening 30. Lands 42 are preferably formed following assembly of wheel 16 so as to place the pilot axis i.e. the axis of the centre-pilote opening 30 at a predefined relationship with respect to the average axis of bead seat regions 20, 22 and/or the axis of the circle of bolt openings 36. Such pilot axis may be nominally concentric or coaxial with the average bead seat axis and/or the bolt-hole circle axis, or may be radially offset from either or both of such axes in accordance with the teachings of the U.S. patents noted hereinabove. Where one or both of the centre-pilot and bolt-opening axes are intentionally eccentrically offset from the average bead seat axis, it is preferred to locate a peak of the first harmonic of radial runout adjacent to the wheel valve opening 44. Tire indicia 14 is then located in assembly in radially adjacent alignment with the valve hole 44 (Figs.1 and 3) so that the intentionally-created first harmonic of wheel radial runout tends to cancel the first harmonic of radial force variation of the tire.

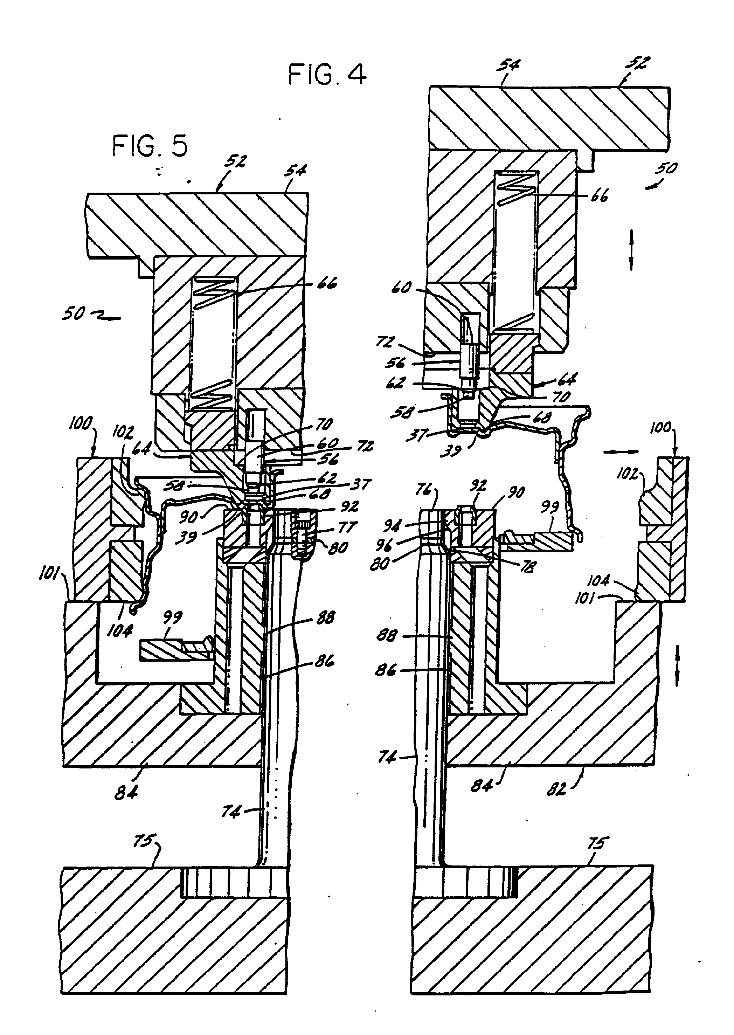

FIGS. 4-7 illustrate apparatus 50 for forming bolt and centre-pilot mounting openings in the wheel of FIGS. 1-3 and 10. Apparatus 50 includes an upper die assembly 52 having a base 54 coupled to a hydraulic drive or the like (not shown) for driving upper die assembly 52 in a vertical reciprocating motion. A plurality of bolt-opening punches 56 are affixed to base 54 in a downwardly dependently oriented circular array concentric with the axis of vertical reciprocation. Each punch 56 includes a substantially cylindrical tip 58 for piercing a bolt opening in a wheel disc, a base 60 affixed to the die base, and an intermediate conical shoulder 62 which engages the disc subsequent to piercing of the bolt openings by tip 58 and coins the outboard edge of the pierced bolt openings. A die head or stripper 64 is mounted for lost-motion axial movement on base 54 at the lower face thereof surrounding punches 56. A plurality of coil springs 66 normally bias head 64 downwardly of base 54 to the position shown in FIG. 4 of the drawings. The lowermost portion of head 64 is contoured as at 68 to engage the wheel disc surrounding the raised bolt-hole islands 37, and is apertured to receive wheel disc cone 32 and permit passage of bolt hole punches 56 therethrough. A flat upper surface 70 on head 64 cooperates with an opposing flat lower surface 72 on base 54 to define a stop so as to limit upward relative motion of head 64 with respect to and into base 54.

A cylindrical column 74 is mounted to a fixed lower base 75 and projects upwardly therefrom coaxially with the vertical axis of reciprocation of upper die assembly 52. A swage punch 76 is mounted by bolts 77 on the upper end of column 74. The diameter of swage punch 76 is less than the diameter of column 74, with the upper end of column 74 having an upwardly tapering conical shoulder 78 and a flat upper surface 80 perpendicular to the axis of die reciprocation onto which punch 76 is mounted. A lower die assembly 82 is mounted for guided axial sliding motion on and with respect to fixed centre column 74. Lower die assembly 82 includes a lower die base 84 having a centre bore 86 received over column 74 and radially inwardly oriented shoulders 88 in sliding engagement therewith. Die assembly 82 has a planar upper surface 90 perpendicular to the axis of die reciprocation and adapted to receive a wheel disc on the mounting surface thereof defined by a depressed circular shoulder 39 surrounding each raised bolt hole island 37. In the initial position of lower die assembly 82 illustrated in FIG. 4, disc mounting surface 90 is co-planar with the upper surface of punch 76.

A circumferential array of buttons 92 is mounted on lower die assembly 82 and these buttons project upwardly from surface 90 so as to be individually received from the inboard direction within the pockets defined by wheel disc islands 37. Buttons 92 angularly locate the preassembled disc and rim with respect to die assemblies 52, 82. A shoulder 94 slidably engages punch 76 and has a conical lower edge 96 complementary to surface 78 on column 74.

A circumferential array of jaws 100 are slidably mounted for conjoint radial reciprocation on a planar surface 101 of lower die assembly base 84 perpendicular to column 74. Each jaw 100 includes a pair of horns 102, 104 contoured for engagement from the outward radial direction with the outboard and inboard bead seats of the preassembled rim and disc. Most preferably, the wheel-engaging positions of the several jaws 100 are individually adjustable. Jaws 100 are coupled by roller cams (not shown) to upper die assembly 52 such that initial downward motion of upper die assembly 52 between the positions of FIGS. 4 and 5 cams jaws 100 conjointly radially inwardly. A carrier ring 99 is likewise coupled to upper die assembly 52 (by means not shown) for conjoint motion therewith coaxially with column 74 between an upper wheel-receiving position (FIG. 4) and a lower position (FIGS. 5-7) beneath the plane of jaws 100.

In operation, a disc wheel is preformed so as to include rim 18 having inboard and outboard bead seat regions 20, 22, and a wheel mounting disc 24 carried interiorly of the wheel rim. The rim and disc illustrated in the drawings are preferably separately formed to the contours shown in any suitable blanking, bending, rolling and/or forming operation, and are joined to each other as by welding or the like where the outer periphery 28 of wheel disc 24 engages the inner surface of rim 18. Apparatus 50 receives such a preformed rim and disc manually or in an automated operation for the purpose of forming the bolt and centre-pilot mounting openings therein.

Initially, the preformed rim and disc is received and held on ring 99, which engages the rim inboard bead seat as shown in FIG. 4. Upper die assembly 52 is then moved downwardly (from a position not shown) into engagement with the outboard disc face (FIG. 4). Continuous downward motion of upper die assembly 52 moves the inboard disc face against lower die assembly surface 90, and then closes jaws 100 to engage the rim bead seats.

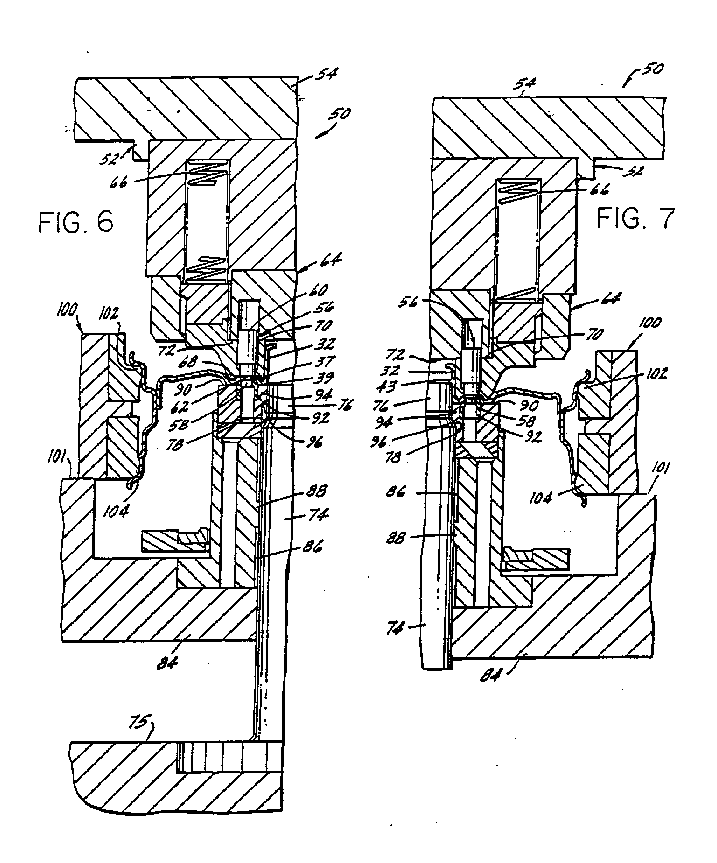

The preformed rim and disc is thus positioned on lower die assembly surface 90 with buttons 92 received within the pockets of bolt hole islands 37. Jaws 100 are in the positions illustrated in FIGS. 5-7 wherein the horns 102, 104 engage and hold rim bead seats 22, 20. The several jaws 100 are preadjusted during a set-up operation so that the average bead seat axis defined by the engaged bead seat regions has a predetermined relationship to the axis of die reciprocation, either nominally coaxial or eccentrically offset therefrom by a predetermined amount. The axis of the circle of bolt holes to be formed by punches 56 is preferably co-incident with the axis of die reciprocation. Thus, the several jaws 100 locate the average bead seat axis coaxially with the bolt hole circle axis or place such average bead seat axis at a position eccentrically offset from the axis of the bolt-hole circle by a preselected amount in accordance with the teachings of the above-referenced patents. With the wheel so fixtured by the locating jaws 100 (FIG. 5), downward propulsion of upper die assembly 52 is continued in an uninterrupted motion to and through the positions illustrated in successive FIGS. 5 and 6.

As upper die assembly 52 is propelled downwardly from the position of FIG. 5 toward the position of FIG. 6, the annular bosses 68 on upper die head or stripper 64 initially engage the wheel disc around the several bolt hole islands 37, and thus cooperate with buttons 92 on lower die assembly 82 to clamp the bolt hole islands against deflection and to hold the wheel disc firmly against lower die mounting surface 90. With upper die head 64 thus engaged with the wheel mounting disc (FIG. 5), continued downward motion of upper die assembly 52 results in lost-motion of die base 54 over die head 64 against the force of springs 66. Punches 56 are thus propelled through apertures in die head 64 so that the punch tips 58 engage and pierce circular bolt openings in the fixtured wheel disc. Further downward motion of upper die assembly 52 brings punch conical shoulders 62 into engagement with the outboard rim of the pierced bolt holes so as to coin each of the pierced bolt holes. At this position (FIG. 6), opposing stop surfaces 70, 72 on die head 64 and die base 54 are in facing abutment so as to stop or arrest further downward motion of die base 54 with respect to die head 64. The several bolt opening punches 56 are positioned on base 54 so that such stop-position (FIG. 6) of base 54 with respect to head 64 corresponds to completion of the coining operation on the pierced bolt openings.

Continued downward motion of upper die assembly 52 from the position of FIG. 6, wherein piercing and coining of the bolt openings is completed, toward the position of FIG. 7 is transmitted to lower die assembly 82 through abutting stop surfaces 70, 72, die head 64 and the thickness of the wheel disc. Lower die assembly 82 and locating jaws 100 mounted thereon thus move downwardly with respect to centre column 74 until the conical surfaces 78, 96 are in abutting relation (FIG. 7). During such downward motion, disc shoulders 40 are drawn downwardly against and over the upper outside edge of punch 76. The diameter of the punch edge is greater than the preformed inside diameter of the disc shoulders, and in fact corresponds to the diameter of the wheel mounting hub (38 in FIG. 3) over which the wheel is to be mounted in use on a vehicle. Thus, punch 76 shears material from the disc shoulder to form lands 42, with excess material being "plowed" to form ledges 43. The inside diameter of the interrupted circle of lands 42 so sheared is accurately positioned and dimensioned for operation as a centre-pilot opening. Shear punch 76 is designed either to locate the axis of such land circle inside diameter nominally coincident with the axis of column 74 and thus with the bolt hole circle, and/or coincident with the average bead seat axis, and/or eccentrically offset from one or both by a predetermined amount and direction. This may be accomplished by making punch 76 eccentric and rotatably adjustable on column 74 to achieve differing positions of the centre-opening axis. From the position of FIG. 7, upper die assembly 52 is withdrawn vertically upwardly, with lower die assembly 82 returning to the rest position of FIGS. 4-6. Jaws 100 are retracted and ring 99 lifts the wheel. The wheel may then be withdrawn from the forming apparatus.

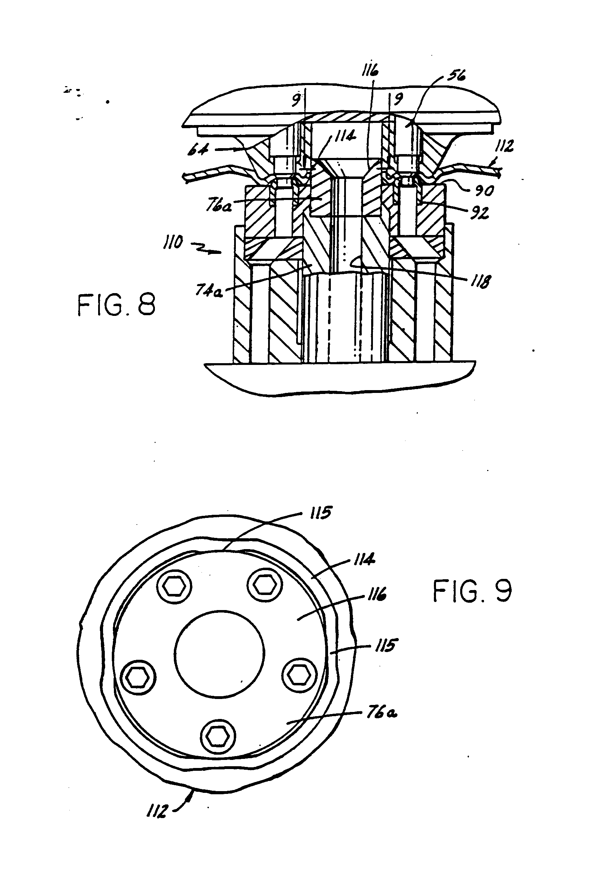

FIGS. 8 and 9 illustrate a modified apparatus 110 for forming the bolt and centre-pilot mounting openings in a so-called turned-neck centre wheel 112. In wheel 112 illustrated in FIGS. 8 and 9, the flange 114 which surrounds and defines the preformed centre opening is terminated at about the level of the outboard surface of the bolt hole islands, and does not project outwardly therefrom to form a hub cone as in the styled wheel previously discussed. As best seen in FIG. 9, flange 114 is substantially circular, with radially inward depressions 115 being positioned between each bolt opening island and the wheel axis. The structure and principles of operation of the apparatus 110 are similar to those previously discussed in detail in connection with FIGS. 4-7, and need not be repeated. One important feature of the apparatus 110 illustrated in FIG. 8, which was not embodied in the apparatus of FIGS. 4-7, contemplates a central bore 116 in swage punch 76a, which flares outwardly to the uppermost surface of the punch. Bore 116 is aligned in assembly with a central bore 118 in column 74a. Thus, in the apparatus of FIGS. 8 and 9, the material which is sheared from the inside diameter of the centre opening flange depressions 115 will fall by gravity through openings 116, 118 for disposal.

## Claims

1. An ornamental vehicle wheel (16) comprising a wheel rim (18) having a bead seat region (20, 22) with a bead seat axis and a wheel-mounting disc (24) affixed internally of said rim (18), said disc (24) comprising a centre opening (30), a circumferential array of radially-directed spoke-simulating raised disc portions (26) separated from each other by radially-directed depressed disc portions (34), a circular array of bolt openings (36) formed one in each of said depressed disc portions (34) adjacent to said centre opening (30) on a bolt-opening array axis, and an integral outwardly projecting hubcap-simulating cone (32) surrounding said centre opening (30), said depressed disc portions (34) each forming a radially inwardly-directed shoulder (40) at said centre opening (30) from which said cone (32) projects, characterised by a plurality of arcuate wheel-mounting lands (42) formed one on each of said shoulders (40) on a common cylinder of revolution on a centre opening axis at predetermined relationship to at least one of said bead seat and bolt opening array axes.

2. The wheel as set forth in claim 1, characterised in that each of said wheel mounting lands (42) is disposed in generally radial alignment with an associated one of said bolt openings (36).

3. The vehicle wheel as set forth in claim 1, characterised in that said wheel-mounting lands (42) are shear-formed.

4. The vehicle wheel as set fort in claim 3, characterised in that said centre opening axis is coincident with said bead seat and bolt-opening array axes.

5. A vehicle wheel (16) comprising a wheel rim (18) having a bead seat region (20, 22) and a wheel-mounting disc (24) affixed internally of said rim, comprising a centre opening (30) surrounded by a circular flange (40 or 114) oriented axially of said disc characterised in that said disc (24) has an angularly spaced array of indentations (115) extending radially inwardly of said flange (40;114) and axially therealong, said indentations (115) having radially inwardly oriented and axially extending wheel-mounting surfaces formed one on each of said indentations on a common cylinder of revolution defining the axis of said centre opening (30).

6. The vehicle wheel as set forth in claim 5, characterised in that said disc (24) is provided with a circular array of wheel mounting bolt openings immediately radially outwardly of said circular flange (40,114), and each of said indentations is aligned generally radially inwardly of an associated bolt hole.

7. The vehicle wheel as set forth in claim 5, characterised in that said wheel-mounting surfaces are shear formed on the associated one of said indentations such that said centre opening axis of said common cylinder of revolution of said wheel mounting surfaces has a predetermined relationship to a bead seat axis of a bead seat region (20,22) of said wheel rim (18).

8. The vehicle wheel as set forth in claim 7, characterised in that said centre opening axis is located coincident with said bead seat axis.

9. The wheel as set forth in claim 8, characterised in that said disc has a circular array of wheel mounting bolt openings immediately radially outwardly of said circular flange (40;114), and said centre opening axis is located coincident with the axis of the bolt openings circular array axis.

10. The wheel as set forth in any one of claims 1 to 9, characterised in that said centre opening axis is eccentrically offset from said bead seat axis in a direction and an amount which are predetermined to locate the low point or high point of the first harmonic of bead seat radial run-out circumferentially adjacent to a selected location on the wheel rim.

**Patentansprüche**

1. Fahrzeugrad (16) in dekorativer Gestaltung, umfassend eine Rad-Felge (18) mit einem Wulst-Sitzbereich (20, 22), wobei eine Wulstsitz-Achse und eine Radmontierungs-Scheibe (24) sich innerhalb der besagten Felge (18) befinden, wobei die besagte Scheibe (24) aufweist: eine Mittelöffnung (30), eine Umfangsanordnung von radial gerichteten, Speichen nachahmenden, erhabenen Scheibenbereichen (26), die voneinander durch radial gerichtete, vertiefte Scheibenbereiche (34) getrennt sind, eine kreisförmige Anordnung von Bolzen-Löchern (36), von denen jeweils eines in jedem der besagten vertieften Scheibenbereiche (34) in der Nähe der besagten Mittelöffnung (30) ausgebildet ist, auf einer Achse der Bolzen-Loch-Anordnung, und einen integralen, nach außen vorstehenden, eine Radkappe nachahmenden, die besagte Mittelöffnung (30) umgebenden Kegel (32), wobei die besagten vertieften Scheibenbereiche (34) jeweils eine radiale, einwärts gerichtete Schulter (40) an der besagten Mittelöffnung (30) bilden, von der der besagte Kegel (32) vorsteht, gekennzeichnet durch eine Anzahl von bogenförmigen Radmontierungs-Feldern (42), von denen jeweils eines an jeder der besagten Schultern (40) auf einem gemeinsamen Rotationszylinder auf einer Mittelöffnungs-Achse bei vorbestimmter Relation zu wenigstens einer der besagten Achsen, nämlich Wulstsitz-Achse und Achse der Bolzen-Loch-Anordnung, ausgebildet ist.

2. Fahrzeugrad nach Anspruch 1, dadurch gekennzeichnet, daß jedes der besagten RadmontierungssFelder (42) im wesentlichen in radialer Ausrichtung mit einem zugeordneten Bolzen-Loch (36) angeordnet ist.

3. Fahrzeugrad nach Anspruch 1, dadurch gekennzeichnet, daß die Radmontierungs-Felder (42) scher-geformt sind.

4. Fahrzeugrad nach Anspruch 3, dadurch gekennzeichnet, daß die besagte Mittelöffnungs-Achse mit der besagten Wulstsitz-Achse und der Achse der Bolzenloch-Anordnung zusammenfällt.

5. Fahrzeugrad (16), umfassend eine Rad-Felge (18) mit einem Wulst-Sitzbereich (20, 22) und eine innerhalb der besagten Felge befindliche Radmontierungs-Scheibe (24), umfassend eine Mittelöffnung (30), die von einem kreisförmigen, axial zu der besagten Scheibe orientierten Bord (40 oder 114) umgeben ist, dadurch gekennzeichnet, daß die besagte Scheibe (24) eine Anordnung von im Winkel Abstand voneinander aufweisenden Ausformungen (115) hat, die sich radial einwärts von dem besagten Bord (40; 114) und axial entlang demselben erstrecken, wobei die besagten Ausformungen (115) radial einwärts orientierte und sich axial erstreckende Radmontierungs-Flächen aufweisen, von denen jeweils eine an jeder der besagten Ausformungen auf einem gemeinsamen Rotationszylinder ausgebildet ist, der die Achse der besagten Mittelöffnung (30) definiert.

6. Fahrzeugrad nach Anspruch 5, dadurch gekennzeichnet, daß die besagte Scheibe (24) mit einer kreisförmigen Anordnung von Radmontierungs-Bolzen-Löchern unmittelbar radial außerhalb des besagten kreisförmigen Bordes (40; 114) versehen ist, und daß jede der besagten Ausformungen im wesentlichen radial einwärts zu einem zugeordneten Bolzen-Loch ausgerichtet ist.

7. Fahrzeugrad nach Anspruch 5, dadurch gekennzeichnet, daß die besagten Radmontierungs-Flächen jeweils an einer zugehörigen der besagten Ausformungen scher-geformt sind, derart, daß die besagte Mittelöffnungs-Achse des besagten gemeinsamen Rotationszylinders der besagten Radmontierungs-Flächen eine vorbestimmte Relation zu einer Wulstsitz-Achse eines Wulstsitz-Bereichs (20, 22) der besagten Rad-Felge (18) hat.

8. Fahrzeugrad nach Anspruch 7, dadurch gekennzeichnet, daß die besagte Mittelöffnungs-Achse mit der besagten Wulstsitz-Achse zusammenfallend angeordnet ist.

9. Fahrzeugrad nach Anspruch 8, dadurch gekennzeichnet, daß die besagte Scheibe eine kreisförmige Anordnung von Radmontierungs-Bolzen-Löchern unmittelbar radial außerhalb des besagten kreisförmigen Bordes (40; 114) aufweist, und daß die besagte Mittelöffnungs-Achse mit der Achse der kreisförmigen Anordnung von Bolzen-Löchern zusammenfallend angeordnet ist.

10. Fahrzeugrad nach einem der Ansprüche 1 bis 9, dadurch gekennzeichnet, daß die besagte Mittelöffnungs-Achse exzentrisch gegenüber der besagten Wulstsitz-Achse versetzt ist, in einer Richtung und mit einem Betrag, die bestimmt sind, um den niedrigen Punkt oder den hohe Punkt der ersten Harmonischen des radialen Unrundlaufs des Wulstsitzes in Umfangsrichtung nahe einer ausgewählten Stelle an der Radfelge zu lokalisieren.

**Revendications**

1. Roue de véhicule décorative (16) comprenant une jante (18) munie d'une région (20, 22) de sièges de talon, avec un axe des sièges de talon, et d'un disque (24) de montage de roue fixé à l'intérieur de ladite jante (18), ledit disque (24) comprenant une ouverture centrale (30), une série circonférentielle de parties de disque radiales (26) en saillie, qui simulent des rayons et qui sont séparées les unes des autres par des parties radiales déprimées (34) de disque, une rangée circulaire d'ouvertures (36) de passage des goujons, à raison d'une ouverture dans chaque partie de disque déprimée (34) près de ladite ouverture centrale (30) et autour d'un axe de rangée d'ouvertures de passage des goujons, et, entourant ladite ouverture centrale (30), un cône (32) simulant un chapeau de moyeu et dépassant d'un seul tenant vers l'extérieur, lesdites parties de disque déprimées (34) formant chacune un épaulement (40) dirigé radialement vers l'intérieur au voisinage de ladite ouverture centrale (30), épaulements à partir desquels s'étend le cône (32), caractérisée par une pluralité de languettes arquées (42) de montage de roue formées à raison d'une sur chacun desdits épaulements (40) et situées sur un cylindre de révolution commun centré sur l'axe de l'ouverture centrale de façon à présenter une relation prédéterminée avec l'un au moins desdits axes des sièges de talon et de la rangée d'ouvertures de passage des goujons.

2. Roue selon la revendication 1, caractérisée en ce que chacune desdites languettes (42) de montage de roue se trouve alignée, d'une manière générale radialement, avec une ouverture (36) de passage de goujon associée.

3. Roue de véhicule selon la revendication 1, caractérisée en ce que lesdites languettes (42) de montage de roue sont formées par découpe.

4. Roue de véhicule selon la revendication 3, caractérisée en ce que ledit axe de l'ouverture centrale coïncide avec lesdits axes des sièges de talon et de la rangée d'ouvertures de passage des goujons.

5. Roue de véhicule (16) comprenant une jante (18) munie d'une région (20,22) de sièges de talon et d'un disque (24) de montage de roue fixé à l'intérieur de ladite jante, comprenant une ouverture centrale (30) entourée d'un rebord circulaire (40 ou 114) orienté parallèlement à l'axe dudit disque, caractérisée en ce que ledit disque (24) possède une rangée d'entailles (115) espacées angulairement et s'étendant radialement vers l'intérieur dudit rebord (40 ; 114) et parallèlement à celui-ci, lesdites entailles (115) ayant chacune une surface de montage de roue orientée radialement vers l'intérieur et s'étendant axialement, l'ensemble de ces surfaces se trouvant sur un cylindre de révolution commun déterminant l'axe de ladite ouverture centrale (30).

6. Roue de véhicule selon la revendication 5, caractérisée en ce que ledit disque (24) est muni d'une rangée circulaire d'ouvertures pour le passage des goujons destinés au montage de la roue, située immédiatement à l'extérieur radialement dudit rebord circulaire (40 ; 114), et en ce que chacune desdites entailles est alignée d'une manière générale radialement vers l'intérieur avec une ouverture de passage de goujon associée.

7. Roue de véhicule selon la revendication 5, caractérisée en ce que lesdites surfaces de montage de roue sont formées par découpe de l'entaille associée de telle façon que ledit axe de l'ouverture centrale, correspondant à l'axe dudit cylindre de révolution commun desdites surfaces de montage de roue, ait une relation prédéterminée avec l'axe des sièges de talon de la région (20, 22) de sièges de talon de ladite jante de roue (18).

8. Roue de véhicule selon la revendication 7, carac-

térisée en ce que ledit axe de l'ouverture centrale coïncide avec ledit axe des sièges de talon.

9. Roue selon la revendication 8, caractérisée en ce que ledit disque présente une rangée circulaire d'ouvertures pour le passage des goujons destinés au montage de la roue, située immédiatement à l'extérieur radialement dudit rebord circulaire (40 ; 114), et en ce que ledit axe de l'ouverture centrale coïncide avec l'axe de la rangée circulaire d'ouvertures de passage de goujons.

10. Roue selon l'une quelconque des revendications 1 à 9, caractérisée en ce que ledit axe de l'ouverture centrale est décalé excentriquement par rapport à l'axe des sièges de talon d'une façon prédéterminée en direction et en valeur de façon que le maximum ou le minimum du premier harmonique de l'excentricité radiale des sièges de talon soit situé au voisinage circonférentiel d'un emplacement choisi sur la jante de roue.

FIG. 1

FIG. 3.

FIG. 2

FIG. 10

FIG. 4

FIG. 5

FIG. 6

FIG. 7

FIG. 8

FIG. 9